# EUROPEAN PATENT SPECIFICATION

(11) **EP 3 537 648 B1**
(45) Date of publication and mention of the grant of the patent: **16.08.2023**
(21) Application number: 17868314.0
(22) Date of filing: 12.07.2017
(51) Int. Cl.: H04L 5/00

(54) **DATA TRANSMISSION METHOD AND DEVICE IN WIRELESS COMMUNICATION NETWORK**
DATENÜBERTRAGUNGSVERFAHREN UND -VORRICHTUNG IN DRAHTLOSKOMMUNIKATIONSSYSTEM
PROCÉDÉ ET DISPOSITIF DE TRANSMISSION DE DONNÉES DANS UN RÉSEAU DE COMMUNICATION SANS FIL

(30) Priority: 04.11.2016 CN 201610964125
(43) Date of publication of application: 11.09.2019
(73) Proprietor: Vivo Mobile Communication Co., Ltd., Dongguan, Guangdong 523860 (CN)
(72) Inventor: JIANG, Lei, Dongguan Guangdong 523860 (CN)
(74) Representative: Conti, Marco
(86) International application number: PCT/CN2017/092555
(87) International publication number: WO 2018/082336

(56) References cited:
- WO-A1-2016/130175
- CN-A- 101 895 821
- CN-A- 103 220 796
- CN-A- 104 955 106
- US-A1- 2014 177 467
- PANASONIC: "Discussion on the multiplexing of different numerologies", 3GPP DRAFT; R1-164985, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096781, Retrieved from the Internet: URL:http://www.3gpp.org/ftp/tsg_ran/WG1_RL 1/TSGR1_85/Docs/ [retrieved on 2016-05-13]
- INTEL CORPORATION: "Frame structure design for NR", 3GPP DRAFT; R1-166555 INTEL NR FRAME STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 13 August 2016 (2016-08-13), XP051132842, Retrieved from the Internet: URL:http://www.3gpp.org/ftp/tsg_ran/WG1_RL 1/TSGR1_86/Docs/ [retrieved on 2016-08-13]

## Description

### TECHNICAL FIELD

The present disclosure relates to the field of wireless communication technologies, and more particularly, to a data transmission method and device in a wireless communication network.

### BACKGROUND

Compared with previous mobile communication systems, the future 5G (fifth generation mobile communication technology) needs to adapt to more diverse scenarios and service requirements. The main scenarios of 5G include enhanced mobile broadband (eMBB), massive machine type communications (mMTC), and ultra reliability and low latency communication (URLLC). These scenarios put forward various requirements for the wireless communication network, such as, high reliability, low latency, large bandwidth and wide coverage. In order to adapt to services with different requirements and various service scenarios, the wireless communication network may support various subcarrier spacings (SCSs). Different subcarrier spacings may be applied to different scenarios. For example, regarding a high frequency band with a large bandwidth, a relatively large subcarrier spacing may be configured. At the same time, a large subcarrier spacing corresponds to a small symbol length in a time domain, which may satisfy the requirements of low-latency services.

Generally speaking, after accessing a wireless communication network initially, a user equipment (UE) will obtain numerology information of the wireless communication network, i.e., a subcarrier spacing size, a subband bandwidth corresponding to the subcarrier spacing, and so on. Due to the timeliness of services, services transmitted in the wireless communication network may be different at different time points. However, bandwidths corresponding to different subcarrier spacings serve different services. When the service is changed, previous subcarrier numerology may be no longer applicable. If numerology information obtained at the initial access is still used to transmit data, it may not adapt to the change of different services. WO2016/130175A1 discloses a device, system and method employing unified flexible 5G air interface. "Discussion on the multiplexing of different numerologies" discloses numerology multiplexing within one band. "Frame structure design for NR" discusses NR frame structure design.

### SUMMARY

The present invention is set out in the independent claims whereas preferred embodiments and further implementations are outlined in the dependent claims, description and figures.

### BRIEF DESCIPTION OF THE DRAWINGS

FIG.1 is a schematic diagram illustrating multiple numerologies which are time division multiplexed.
FIG.2 is a schematic diagram illustrating multiple numerologies which are frequency division multiplexed.
FIG.3 is a flowchart illustrating a data transmission method in a wireless communication network, in accordance with an embodiment of the present disclosure.
FIG.4 is a schematic diagram illustrating a structure of a data transmission device in a wireless communication network, in accordance with an embodiment of the present disclosure.
FIG.5 is a flowchart illustrating a data transmission method in a wireless communication network, in accordance with an embodiment of the present disclosure.
FIG.6 is a schematic diagram illustrating a structure of a data transmission device in a wireless communication network, in accordance with an embodiment of the present disclosure.
FIG.7 is a schematic diagram illustrating multiple numerologies which are frequency division multiplexed, in accordance with an embodiment of the present disclosure.
FIG.8 is a schematic diagram illustrating multiple numerologies which are time division multiplexed, in accordance with an embodiment of the present disclosure.
FIG.9 is a schematic diagram illustrating multiple numerologies which are frequency division multiplexed, in accordance with an embodiment of the present disclosure.

### DETAILED DESCRIPTION

The invention is defined by the appended claims.

To make technical problems, technical solutions and advantages of embodiments in the present disclosure more clear, detailed descriptions will be provided hereinafter in conjunction with the following drawings and specific embodiments.

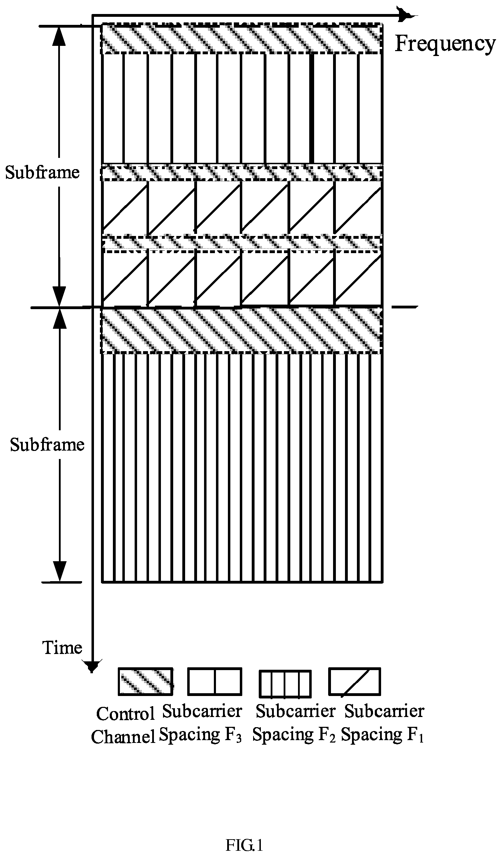

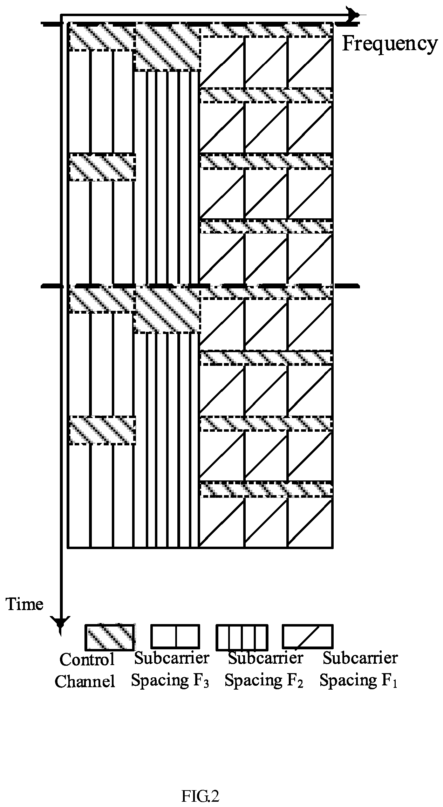

In order to adapt to services with different requirements and various application scenarios, the wireless communication network may support multiple subcarrier spacings (SCSs). Different SCSs may be applicable to different scenarios. For example, regarding a high frequency band with a large bandwidth, a relatively large SCS may be configured. At the same time, a large SCS corresponds to a small symbol length in the time domain, which may meet the requirements of a low-latency service. A multi-carrier spacing multiplexing of the wireless communication network may be applied in the time domain, or in the frequency domain. When multiple numerologies of the wireless communication network are time division multiplexed, as shown in FIG.1, different SCSs are adopted at different time periods, while the SCS is the same for the whole frequency band. When the multiple numerologies are frequency division multiplexed, as shown in FIG.2, different SCSs are adopted at different frequency bands of the frequency domain, while such numerology is unchanged in the time domain.

Generally speaking, after initially accessing the wireless communication network, a UE (terminal) may obtain numerology information of the wireless communication network, i.e., an SCS, a subband bandwidth corresponding to the SCS. Due to the timeliness of services, services transmitted within the wireless communication network at different time points may be different. Bandwidths corresponding to different SCSs serve different services. When the service is changed, previous subcarrier numerology may be no longer applicable. If the numerology information obtained at the initial access is still used to transmit data, it may not adapt to the change of different services.

To solve the foregoing problems, embodiments of the present disclosure provide a data transmission method and device in the wireless communication network, so as to configure a subcarrier flexibly, and adapt to change of different services.

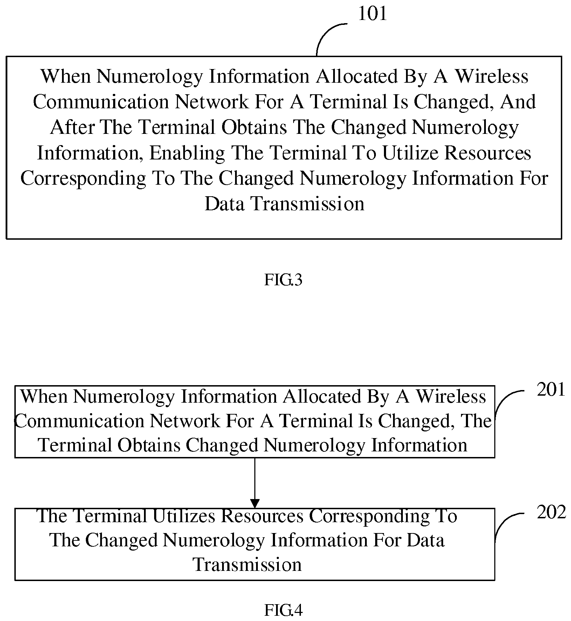

In some embodiments of the present disclosure, a data transmission method in a wireless communication network is provided, which is applied to a node in the wireless communication network. As shown in FIG.3, the embodiment includes the following blocks. The block 101 is to, when numerology information allocated by the wireless communication network for a terminal is changed, and the terminal obtains the changed numerology information, enable the terminal to utilize resources corresponding to the changed numerology information for data transmission.

In the embodiment, when the numerology information corresponding to the terminal is changed, a node in the wireless communication network may send the corresponding information to the terminal, such that the terminal may obtain changed numerology information, and utilize resources corresponding to the changed numerology information for data transmission. Subsequently, the wireless communication network may configure the numerology flexibly, so as to adapt to the change of different services. The foregoing resources include subcarrier resources and subband resources, which are adopted by the terminal for data transmission.

Furthermore, when the multiple numerologies are time division multiplexed, the numerology information includes at least one of the following:
(1) the changed SCS; the SCS may be indicated by a few bits, and the length of the bits depends on the number of available SCSs;
(2) a time-domain starting position, and/or, a time-domain ending position of the changed SCS; the granularity of the time-domain starting position, and/or, the time-domain ending position may be subframe or millisecond, i.e., 5ms, 10ms, 40ms, or any other integer values; the time-domain starting position, and/or, the time-domain ending position may also be less than 1ms, and the granularity may be slot or mini slot, i.e., 0.5ms;
(3) cyclic prefix (CP) information, which includes a normal CP, an extended CP, and CPs of different lengths.

When the multiple numerologies are frequency division multiplexed, the numerology information includes at least one of the following:
(1) the changed SCS; the SCS may be indicated by a few bits, and the length of the bits depends on the number of available SCSs;
(2) a time-domain starting position, and/or, a time-domain ending position of the changed SCS; the granularity of the time-domain starting position and/or time-domain ending position may be subframe or millisecond, i.e., 5ms, 10ms, 40ms, or any other integer values; the time-domain starting position and/or time-domain ending position may also be less than 1ms, and the granularity may be slot or mini slot, i.e., 0.5ms;
(3) CP information, which includes normal CP, extended CP, and CPs of different lengths;
(4) frequency domain information of the changed SCS, which further includes at least one of the following:
   a. subband starting position;
   b. subband ending position;
   c. subband (virtual)-DC carrier position, or subband center carrier position;
   d. subband bandwidth;
   e. frequency hopping information (discrete subband allocation).

Furthermore, when the numerology information allocated by the wireless communication network for the terminal is changed, and the terminal obtains the changed numerology information, enabling the terminal to utilize resources corresponding to the changed numerology information for data transmission includes: indicating the terminal to obtain the changed numerology information via downlink control information; or, indicating all the terminals in the network to obtain the changed numerology information via a broadcast message or a synchronization signal; or, indicating the terminal to obtain the changed numerology information via a radio resource control (RRC) message.

Furthermore, when the numerology information allocated by the wireless communication network for the terminal is changed, after the terminal obtains the changed numerology information, before enabling the terminal to utilize resources corresponding to the changed numerology information for data transmission, the method further includes that: establishing and storing a corresponding relationship between multiple pieces of numerology information and index of the multiple pieces of numerology information, sending the corresponding relationship to the terminal. When the numerology information allocated by the wireless communication network for the terminal is changed, and after the terminal obtains the changed numerology information, enabling the terminal to utilize resources corresponding to the changed numerology information for data transmission includes: sending the index of the numerology information corresponding to the changed numerology information to the terminal via downlink control information (DCI); or, sending the index of the numerology information corresponding to the changed numerology information to all the terminals in the network via a broadcast message or a synchronization signal; or, sending the index of the numerology information corresponding to the changed numerology information to the terminal via a radio resource control (RRC) message. The index of the numerology information may be an identifier, or an index of the numerology information. Specifically, a set of numerology information may be established in advance. The set includes multiple pieces of numerology information. Each piece of numerology information corresponds to an index of numerology information. The wireless communication network notices the terminal the set of numerology information in advance. After the numerology information is changed, it is only necessary to send the index of the changed numerology information to the terminal. The terminal directly searches for the index of the numerology information, and obtains the changed numerology information.

Furthermore, when the numerology information allocated by the wireless communication network for the terminal is changed, and after the terminal obtains the changed numerology information, enabling the terminal to utilize resources corresponding to the changed numerology information for data transmission includes: sending the changed numerology information to the terminal via a pre-defined message or signal, such that the terminal obtains the changed numerology information.

Furthermore, before sending the changed numerology information to the terminal via a pre-defined message or signal, the method further includes that: sending a numerology information change indication to the terminal. Subsequently, the terminal determines that the numerology information is changed, according to the numerology information change indication, and detects the changed numerology information from the received pre-defined message or signal. The numerology information change indication may be indicated by 1 bit. By adopting the numerology information change indication, detections at the terminal side may be reduced, such that the terminal performs detections only after the numerology information is changed.

Furthermore, sending the changed numerology information to the terminal via a pre-defined message or signal includes: sending the changed numerology information to the terminal via downlink control information; or, sending the changed numerology information to all the terminals in the network via a broadcast message or synchronization signal; or, sending the changed numerology information to the terminal via an RRC message.

Configuration via the RRC message is applied to semi-static subcarrier numerology, and indication via the DCI is applied to dynamic subcarrier numerology.

In some embodiments of the present disclosure, a data transmission method in a wireless communication network is provided, which is applied to a terminal in the wireless communication network. As shown in FIG.4, the embodiment includes the following blocks. In block 201, after numerology information allocated by a wireless communication network for a terminal is changed, the terminal obtains the changed numerology information. In block 202, the terminal utilizes resources corresponding to the changed numerology information for data transmission.

In the embodiment, after the numerology information corresponding to the terminal is changed, a node in the wireless communication network may send the corresponding information to the terminal, such that the terminal may obtain the changed numerology information, and utilize resources corresponding to the changed numerology information for data transmission. Subsequently, the wireless communication network may configure the numerology flexibly, so as to adapt to the change of different services.

Furthermore, when multiple numerologies are time division multiplexed, the numerology information includes at least one of the following:
(1) the changed SCS; the SCS may be indicated by a few bits, and the length of the bits depends on the number of available SCSs;
(2) a time-domain starting position, and/or a time-domain ending position of the changed SCS; the granularity of the time-domain starting position, and/or, time-domain ending position may be subframe, or millisecond, i.e., 5ms, 10ms, 40ms, or any other integer values; the time-domain starting position, and/or, time-domain ending position may also be less than 1ms, and the granularity may be slot, or mini slot, i.e., 0.5ms;
(3) CP information, which includes normal CP, extended CP, and CPs of different lengths.

When multiple numerologies are frequency division multiplexed, the numerology information includes at least one of the following:
(1) the changed SCS; the SCS may be indicated by a few bits, and the length of the bits depends on the number of available SCSs;
(2) a time-domain starting position, and/or, a time-domain ending position of the changed SCS; the granularity of the time-domain starting position, and/or, time-domain ending position may be subframe, or millisecond, i.e., 5ms, 10ms, 40ms, or any other integers; the time-domain starting position, and/or, time-domain ending position may also be less than 1ms, and the granularity may be slot or mini slot, i.e., 0.5ms;
(3) CP information, which includes normal CP, extended CP, and CPs of different lengths;
(4) frequency domain information of the changed SCS, which further includes at least one of the following:
   a. subband starting position;
   b. subband ending position;
   c. subband (virtual)-DC carrier position, or subband-center carrier position
   d. subband bandwidth;
   e. frequency hopping information (discrete subband allocation).

Furthermore, after the numerology information allocated by the wireless communication network for the terminal is changed, obtaining the changed numerology information includes: receiving downlink control information from a node in the wireless communication network, which indicates the terminal that the numerology information is changed, detecting the multiple pieces of numerology information one by one, detecting the changed numerology information from the multiple pieces of numerology information; or, receiving a broadcast message or a synchronization signal from a node in the wireless communication network, which indicates the terminal that the numerology information is changed, detecting multiple pieces of numerology information one by one, and detecting changed subcarrier numerology information from the multiple pieces of numerology information; or, receiving an RRC message from a node in the wireless communication network, which indicates the terminal that the numerology information is changed, detecting multiple pieces of numerology information one by one, and detecting the changed numerology information from the multiple pieces of numerology information.

The synchronization signal includes a primary synchronization signal (PSS)/secondary synchronization signal (SSS), new radio-PSS (NR-PSS)/new radio-SSS (NR-SSS).

Furthermore, after the numerology information allocated by the wireless communication network for the terminal is changed, before obtaining the changed numerology information, the method further includes: receiving a corresponding relationship from the node of the wireless communication network, in which the corresponding relationship is between multiple pieces of numerology information and index of the multiple pieces of numerology information. After the numerology information allocated by the wireless communication network for the terminal is changed, obtaining the changed numerology information includes: receiving an index of numerology information corresponding to the changed numerology information, which is transmitted by the node in the wireless communication network via downlink control information, detecting the changed numerology information according to the index of the numerology information; or, receiving an index of the numerology information corresponding to the changed numerology information, which is transmitted by the node in the wireless communication network via a broadcast message or synchronization signal, and detecting the changed numerology information according to the index of the numerology information; or, receiving the index of the numerology information corresponding to the changed numerology information, which is transmitted by the node in the wireless communication network via an RRC message, and detecting the changed numerology information according to the index of the numerology information.

The index of the numerology information may be an identifier, or an index of the numerology information. Specifically, a set of numerology information may be established in advance. The set includes multiple pieces of numerology information. Each piece of numerology information corresponds to an index of numerology information. The terminal is notified of the set of numerology information in advance. After the numerology information is changed, it is only necessary to send the index of the changed numerology information to the terminal. The terminal directly searches for the index of the numerology information, and then obtains the changed numerology information.

Furthermore, after the numerology information allocated by the wireless communication network for the terminal is changed, obtaining the changed numerology information includes: receiving the changed numerology information from the node in the wireless communication network via a pre-defined message or signal.

Furthermore, after the numerology information allocated by the wireless communication network for the terminal is changed, before obtaining the changed numerology information, the method further includes: receiving a numerology information change indication from the node in the wireless communication network, determining that the numerology information is changed according to the numerology information change indication, and detecting the changed numerology information from the received pre-defined message or signal. The numerology information change indication may be indicated by 1 bit. Detections at the terminal side may be reduced, by using the numerology information change indication, such that the terminal performs the detections only after the numerology information is changed. Furthermore, after the numerology information allocated by the wireless communication network for the terminal is changed, obtaining the changed numerology information includes: receiving the changed numerology information from the node in the wireless communication network via downlink control information; or, receiving the changed numerology information from the node in the wireless communication network via a broadcast message or synchronization signal; or, receiving the changed numerology information from the node in the wireless communication network via an RRC message.

The configuration via the RRC message is applied to semi-static subcarrier numerology, and the indication via the DCI is applied to dynamic subcarrier numerology.

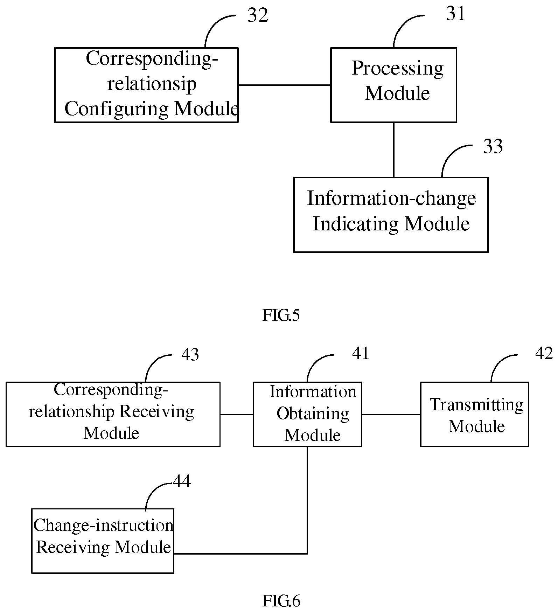

In some embodiments of the present disclosure, a data transmission device in a wireless communication network is provided, which is applied to a node in the wireless communication network. As shown in FIG.5, the device includes: a processing module 31, configured to enable a terminal to utilize resources corresponding to changed numerology information for data transmission, after numerology information allocated by a wireless communication network is changed, and the terminal obtains the changed numerology information.

In the embodiment, after the numerology information corresponding to the terminal is changed, the node in the wireless communication network may transmit the corresponding information to the terminal, such that the terminal may obtain the changed numerology information, and utilize the resources corresponding to the changed numerology information for data transmission. Subsequently, the wireless communication network may configure the numerology flexibly, so as to adapt to the change of different services.

Furthermore, when multiple numerologies are time division multiplexed, the numerology information includes at least one of the following:
(1) the changed SCS; the SCS may be indicated by a few bits, and the length of the bits depends on the number of available SCSs;
(2) a time-domain starting position, and/or, a time-domain ending position of the changed SCS; the granularity of the time-domain starting position, and/or, the time-domain ending position may be subframe, or millisecond, i.e., 5ms, 10ms, 40ms, or any other integer values; the time-domain starting position, and/or, the time-domain ending position may also be less than 1ms, and the granularity may be slot or mini slot, i.e., 0.5ms;
(3) CP information, which includes normal CP, extended CP, and CPs of different lengths.

When the multiple numerologies are frequency division multiplexed, the numerology information includes at least one of the following:
(1) the changed SCS; the SCS may be indicated by a few bits, and the length of the bits depends on the number of available SCSs;
(2) a time-domain starting position, and/or, a time-domain ending position of the changed SCS; the granularity of the time-domain starting position, and/or, the time-domain ending position may be subframe or millisecond, i.e., 5ms, 10ms, 40ms, or any other integer values; the time-domain starting position, and/or, the time-domain ending position may also be less than 1ms, and the granularity may be slot or mini slot, i.e., 0.5ms;
(3) CP information, which includes normal CP, extended CP, and CPs of different lengths;
(4) frequency domain information of the changed SCS, which further includes at least one of the following:
   a. subband starting position;
   b. subband ending position;
   c. subband (virtual)-DC carrier position, or subband-center carrier position;
   d. subband bandwidth;
   e. frequency hopping information (discrete subband allocation).

The processing module 31 is further configured to indicate the terminal to obtain the changed numerology information via downlink control information; or, indicate all the terminals in the network to obtain the changed numerology information via a broadcast message or a synchronization signal; or, indicate the terminal to obtain the changed numerology information via an RRC message.

The synchronization signal includes PSS/SSS, NR-PSS/NR-SSS.

The device further includes a corresponding-relationship configuring module 32, which is configured to establish and store a corresponding relationship, and sending the corresponding relationship to the terminal. The corresponding relationship is between multiple pieces of numerology information and index of the multiple pieces of numerology information. The processing module 31 is further configured to send an index of numerology information corresponding to the changed numerology information to the terminal via downlink control information; or, send an index of the changed numerology information to all the terminals in the network via a broadcast message or a synchronization signal; or, send an index of the changed numerology information to the terminal via an RRC message.

The index of the numerology information may be an identifier, or an index of the numerology information. Specifically, a set of numerology information may be established in advance. The set includes multiple pieces of numerology information. Each piece of numerology information corresponds to an index of the numerology information. The wireless communication network notices the terminal of the set of numerology information in advance. After the numerology information is changed, it is only necessary to send the index of the changed numerology information to the terminal. The terminal directly searches for the index of the numerology information, and obtains the changed numerology information.

Furthermore, the processing module 31 is further configured to send the changed numerology information to the terminal via a pre-defined message or signal, such that the terminal obtains the changed numerology information.

Furthermore, the device further includes an information change indicating module 33, which is configured to send a numerology information change indication to the terminal. Subsequently, the terminal determines that the numerology information is changed, according to the numerology information change indication, and detects the changed numerology information from the received pre-defined message or signal. The numerology information change indication may be indicated by 1 bit. Detections at the terminal side may be reduced, by using the numerology information change indication, such that the terminal only performs the detections, after the numerology information is changed.

Furthermore, the processing module 31 is further configured to send the changed numerology information to the terminal via downlink control information; or, send the changed numerology information to all the terminals in the network via a broadcast message or synchronization signal; or, send the changed numerology information to the terminal via an RRC message.

The configuration via the RRC message is applied to semi-static subcarrier numerology, and the indication via the DCI is applied to dynamic subcarrier numerology.

In some embodiments of the present disclosure, a data transmission device in a wireless communication network is provided, which is applied to a terminal in a wireless communication network. As shown in FIG.6, the device includes: an information obtaining module 41, configured to obtain changed numerology information, after numerology information allocated by the wireless communication network for the terminal is changed; and a transmitting module 42, configured to utilize resources corresponding to the changed numerology information for data transmission.

In the embodiment, when the numerology information corresponding to the terminal is changed, a node in the wireless communication network may send the corresponding information to the terminal, such that the terminal may obtain the changed numerology information, and utilize resources corresponding to the changed numerology information for data transmission. Subsequently, the wireless communication network may configure the numerology flexibly, so as to adapt to the change of different services.

Furthermore, when multiple numerologies are time division multiplexed, the numerology information includes at least one of the following:
(1) the changed SCS; the SCS may be indicated by a few bits, and the length of the bits depends on the number of available SCSs;
(2) a time-domain starting position, and/or, a time-domain ending position of the changed SCS; the granularity of the time-domain starting position, and/or, the time-domain ending position may be subframe, and/or, millisecond, i.e., 5ms, 10ms, 40ms, or any other integer value; the time-domain starting position, and/or, the time-domain ending position may also be less than 1ms, and the granularity may be slot or mini slot, i.e., 0.5ms;
(3) CP information, which includes normal CP, extended CP, and CPs of different lengths.

When multiple numerologies are frequency division multiplexed, the numerology information includes at least one of the following:
(1) the changed SCS; the SCS may be indicated by a few bits, and the length of the bits depends on the number of available SCSs;
(2) a time-domain starting position, and/or, a time-domain ending position of the changed SCS; the granularity of the time-domain starting position, and/or, the time-domain ending position may be subframe or millisecond, i.e., 5ms, 10ms, 40ms, or any other integer values; the time-domain starting position, and/or, the time-domain ending position may also be less than 1ms, and the granularity may be slot or mini slot, i.e., 0.5ms;
(3) CP information, which includes normal CP, extended CP, and CPs of different lengths;
(4) frequency domain information of the changed SCS, which further includes at least one of the following:
   a. subband starting position;
   b. subband ending position;
   c. subband (virtual)-DC carrier position, or subband center carrier position;
   d. subband bandwidth;
   e. frequency hopping information (discrete subband allocation).

Furthermore, the information obtaining module 41 is configured to receive downlink control information from the node in the wireless communication network, which indicates the terminal that the numerology information is changed, detect multiple pieces of numerology information one by one, detect the changed numerology information from the multiple pieces of numerology information; or, receive a broadcast message or synchronization signal from the node in the wireless communication network, which indicates the terminal that the numerology information is changed, detect multiple pieces of numerology information one by one, and detect changed subcarrier numerology information from the multiple pieces of numerology information; or, receive an RRC message from the node in the wireless communication network, which indicates the terminal that the numerology information is changed, detect multiple pieces of numerology information one by one, and detect changed numerology information from the multiple pieces of numerology information.

Furthermore, the device further includes a corresponding-relationship receiving module 43, configured to receive a corresponding relationship from the node in the wireless communication network, in which the corresponding relationship is between multiple pieces of numerology information and index of the multiple pieces of numerology information; the information obtaining module 41 is further configured to receive, from the node in the wireless communication network via downlink control information, an index of numerology information corresponding to the changed numerology information, detect the changed numerology information according to the index of the numerology information; or, receive, from the node in the wireless communication network via a broadcast message or synchronization signal, an index of numerology information corresponding to the changed numerology information, and detect the changed numerology information, according to the index of the numerology information; or, receive, from the node in the wireless communication network via an RRC message, an index of numerology information corresponding to the changed numerology information, and detect the changed numerology information according to the index of numerology information.

The index of numerology information may be an identifier, or an index of numerology information. Specifically, a set of numerology information may be established in advance. The set includes multiple pieces of numerology information. Each piece of numerology information corresponds to an index of numerology information. The terminal is notified of the set of the numerology information. After the numerology information is changed, it is only necessary to send the changed numerology information to the terminal. The terminal directly searches for the index of the numerology information, and obtains the changed numerology information. Furthermore, the information obtaining module 41 is further configured to receive, from a node in the wireless communication network via a pre-defined message or signal, the changed numerology information.

Furthermore, the device further includes a change-indication receiving module 44, configured to receive a numerology information change indication from a node in the wireless communication network. The information obtaining module 41 is further configured to determine that, the numerology information is changed according to the numerology information change indication, and detect the changed numerology information from the received pre-defined message or signal. The numerology information change indication may be indicated by 1 bit. Detections at the terminal side may be reduced, by using the numerology information change indication. Subsequently, the terminal performs detections, only after the numerology information is changed.

Furthermore, the information obtaining module 41 is further configured to receive, from a node in the wireless communication network via downlink control information, the changed numerology information; or, receive, from a node in the wireless communication network via a broadcast message or synchronization signal, the changed numerology information; or, receive, from a node in the wireless communication network via an RRC message, the changed numerology information. The configuration via the RRC message is applied to semi-static subcarrier numerology, and the indication via the DCI is applied to dynamic subcarrier numerology.

In some embodiments, when multiple numerologies are time division multiplexed as shown in FIG.1, the SCSs for flexibly configuring subcarrier by the wireless communication network are {f1, f2, f3}. Assume that f2= 15kHz, FIG.1 includes two subframes, which are 2ms in total. At the time of 0.5ms, the wireless communication network changes the subcarrier spacing for the first time. At the time of 1ms, the wireless communication network changes the subcarrier spacing for the second time. Under these circumstances, since there are 3 kinds of available SCSs, 2 bits may be used to indicate these three different SCSs. For example, f1, f2 and f3 are respectively indicated by 01, 10 and 11. Definitely, other bit combinations may also be used to indicate these three different subcarrier numerologies. When the number of available SCSs increases, the number of needed bits will increase accordingly.

To reduce the number of bits for indicating time-domain starting position of a new SCS (that is, the changed SCS), the time-domain starting position may be indicated by a duration of a previous SCS (that is, the SCS before the change), or, be indicated by a relative position of a new and previous SCS. For example, in FIG.1, the granularity may be slot of 0.5ms, and the starting position of f1 is one slot. The starting position of f2 is also one slot, because compared with f1, the spacing thereof is one slot. Furthermore, the number of indication bits may be reduced by a mode, which combines large time granularity with small time granularity. The indication bits may be divided into two areas. One area indicates time of large granularity. The other area indicates time of small granularity. For example, the spacing between previous and new subcarrier numerologies is 16.5ms. If the granularity may be a slot of 0.5ms, it needs to be indicated by 33 slots. And 6 bits are needed. If being represented by dividing area, 5 bits are needed. In the granularity of millisecond, 4 bits represent 16ms. 1 bit represents a slot of 0.5ms. The number of bits for indicating the time-domain start time depends on the maximum duration that each subcarrier numerology can last, and granularity size of granularity (1ms, 0.5ms, and so on). The time-domain ending position of a new SCS may be indicated in the same way.

The wireless communication network supports different CP lengths. Thus, the wireless communication network needs to inform the UE (terminal) about a CP length, which is adopted by the new SCS. The CP length may be indicated by a few bits. The needed number of bits depends on a length type of the available CP. For example, the wireless communication network possesses 5 kinds of length types of different CPs, and 3 bits are needed to indicate the CP length in use.

For the semi-static indication, foregoing numerology information may be transmitted in the RRC message. For the dynamic indication, the UE may be informed of the change of numerology information in the DCI. In this case, the needed number of bits for indicating the time starting position may be greatly reduced. Current frame may be used for indicating the change of numerology information of a next frame. If processing or scheduling preparation time of the wireless communication network is not enough, the change of numerology information may be indicated by several frames (or several slots) in advance. The number of frames in advance may be specified by the standard, or may be configured by the wireless communication network. The DCI needs to inform the UE about the number of frames in advance, or the number of slots in advance.

For the time division multiplexing, changes of the numerology information are applicable to all the UEs in the wireless communication network. Subsequently, it is necessary to inform all the UEs about the changes of the numerology information. Thus, the broadcast channel or synchronization signal may include the changed numerology information, and then may be detected by all the UEs.

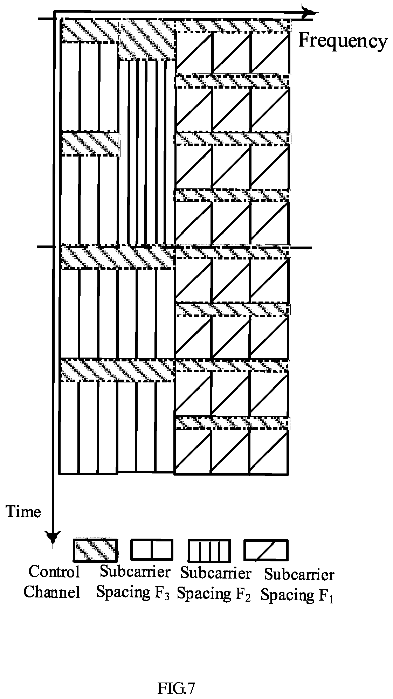

In some embodiments, if multiple subcarrier numerologies are used in frequency domain multiplexing, and support semi-static or dynamic changing, as shown in FIG.7, the wireless communication network may provide more flexible multiplexing. As shown in FIG.7, assume that there are three SCSs {f1, f2, f3}, which may be used for flexible subcarrier numerology, an indication for a new SCS is the same as that in the fifth embodiment. In addition, a time-domain starting position, and/or, a time-domain ending position, a CP length of the new SCS may also be indicated as in the fifth embodiment.

For frequency domain information of the new SCS, if the change is in the level of wireless communication network, it is necessary to inform all the UEs in the wireless communication network. Because the pre-defined frequency domain is fully multiplexed, the UE is informed of one of the starting position or ending position of frequency domain for each kind of subcarrier numerology. If there are blank resources unused in the frequency domain, at this time, the UE should be notified of the starting position and ending position of frequency domain for each kind of subcarrier numerology. The UE may be notified of the frequency domain information with another method, that is, the subband bandwidth and corresponding center carrier frequency, or corresponding (virtual) DC carrier position. In addition, frequency domain resources of each SCS may be discontinuous. Thus, the UE should be notified of all the subband frequency-domain information corresponding to the SCS, or frequency hopping information.

For the frequency division multiplexing, if the change of subcarrier numerology is at the UE level, that is, subcarrier numerology of some UEs may be changed, while other UEs may still use previous subcarrier numerology. In this case, it is only necessary to inform the affected UEs. As shown in FIG.7, assume that UE1, UE2 and UE3 respectively adopt SCS f1, f2, f3, after 1ms, numerology information of UE1 remains unchanged, while UE2 and UE3 adopt SCS f3. Subsequently, the bandwidth becomes the sum of first two subband bandwidths. Thus, within the first frame, UE1 detects that the subcarrier numerology is unchanged, while UE2 and UE3 detect that subcarrier numerology will be changed, meanwhile detect corresponding numerology information.

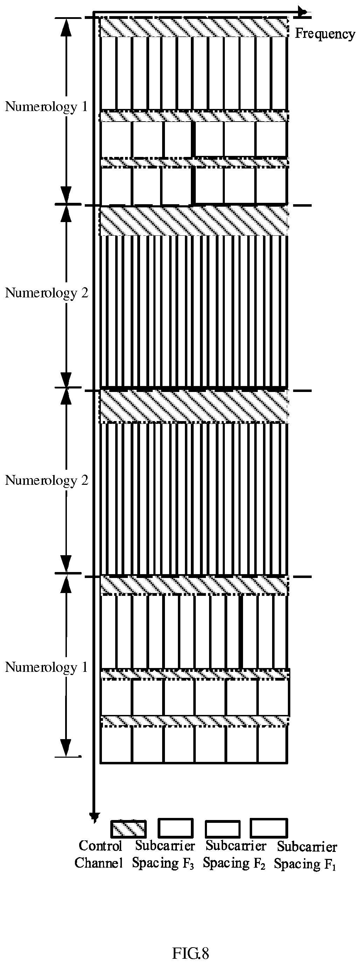

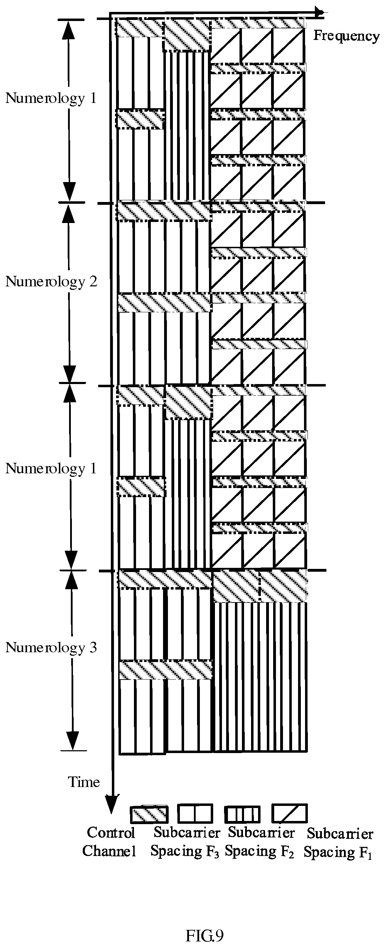

In some embodiments, multiple subcarrier numerologies may be multiplexed with a set of some predefined subcarrier numerologies. These predefined numerologies may be a time-domain multiplexing combination, or a frequency-domain multiplexing combination of multiple subcarrier numerologies, as shown in FIG.8 and FIG.9. In this case, the wireless communication network informs the UE about these sets in advance. When the subcarrier numerology is changed, it is only necessary to inform the UE about the identifier, or index of the UE's subcarrier numerology (which is referred to as index of numerology information). According to the identifier or index of the subcarrier numerology, the UE reads corresponding multiplexing information about subcarrier numerology, and detects the corresponding resources, by using the corresponding subcarrier numerology.

Such subcarrier change may be at the level of wireless communication network, or for some UEs. For example, all the UEs in FIG.8 should be notified every time the numerology is changed. In FIG.9, the numerology change may be at the level of wireless communication network, all the UEs are notified, or only affected UEs are notified. For example, in the first three frames, for UE1 using SCS f1, it may be considered that the subcarrier numerology is not changed; for UE2 and UE3 respectively using SCS f2 and SCS f3, UE2 and UE3 should be informed of new numerology information. Within the fourth frame, all the UEs should be notified of the change of subcarrier numerology.

In some embodiments, in order to reduce overheads of signaling transmission, the UE may obtain information of subcarrier numerology by blind detection. The UE performs the blind detection on the bandwidth of the whole wireless communication network, by using all the possible subcarrier numerologies, and obtains multiplexing information of current subcarrier numerology. In addition, to reduce the number of blind detection performed by the UE, change of subcarrier numerology can be limited to be periodical, or at predefined positions (that is, a time point at which the numerology information is changed). Subsequently, the UE only needs to perform the blind detection at these positions. Meanwhile, the wireless communication network needs to increase a small amount of signaling, so as to indicate these positions.

For the periodical change of subcarrier numerology, or the change of subcarrier numerology at predefined positions, an RRC message can be used to perform the numerology, or such information can be carried by the broadcast channel or synchronization signal. For the non-periodic change of subcarrier numerology, the DCI can be used to trigger the non-periodic change of subcarrier numerology in the physical layer. After receiving the DCI, the UE is triggered to perform the blind detection.

The technical solution of the present disclosure is not only applicable to a scenario, where different subcarrier numerologies are multiplexed in 5G communication, but also applicable to a scenario in future mobile communication, where various parameter numerologies are multiplexed. In the present disclosure, the schematic diagrams illustrate structure of a frame for use in downlink transmission, which is also applicable to uplink transmission. The figure is only a simple schematic diagram, which does not illustrate a guard band or guard interval possibly included by different SCS, but does not affect the usage of the method.

Persons having ordinary skill in the art may learn that, the modules and algorithm blocks described by each embodiment of the present disclosure may be implemented by electronic hardware, or a combination of computer software and electronic hardware. Whether these functions are implemented by hardware or software depends on specific application and design constraints of technical solution. For each specific application, professionals may adopt different methods to implement the described functions, but such implementation should not be considered to extend beyond the scope of the present disclosure.

One of ordinary skill in the art may clearly learn that, to make the descriptions more convenient and concise, specific work process of above-described system, device and modules should refer to corresponding procedures of foregoing method embodiments, which are not repeated here.

In the embodiments of the present disclosure, it should be understood that, the disclosed devices and methods may be implemented by other methods. For example, the above-described device embodiments are only illustrative. For example, the division of module is only a logical function division. In practical implementations, there may be other division methods. For example, multiple modules or components may be combined, or integrated into another system, or some features can be omitted, or not executed. From another point of view, the displayed or discussed mutual coupling, or direct coupling, or communication connection may be implemented, via indirect coupling or communication connection among some interfaces, devices or modules, which may be electrical, mechanical or in another from.

The module, described as a separate component, may be, or may be not physically separated. The component, displayed as a module, may be, or may be not a physical module, which may be located in one place, or may be distributed to multiple network modules. The objectives of solutions in the embodiments may be achieved by all the modules, or some modules, which are selected according to practical requirements.

In addition, various functional modules in each embodiment of the present disclosure may be integrated into one processing module, or each module may physically exist separately. Or, at least two modules are integrated into one module.

When the functions are implemented in the form of software functional modules, and taken as an independent product to be sold or used, such software functional modules may be stored in a computer-readable storage medium. On the basis of such understanding, the essence of technical solution of the present disclosure, or part of the technical solution contributing to related technologies, or part of the technical solution may be represented in the form of software product. Such computer software product is stored in a storage medium, which includes several indications to enable a computer device (which may be a Personal Computer (PC), a server or a network device, and so on) to execute all, or some blocks of the method in each embodiment of the present disclosure. The above-mentioned storage medium includes various mediums for storing program codes, i.e., U disk, mobile hard disk, read-only memory (ROM), random access memory (RAM), disk, or compact disk (CD).

In various method embodiments of the present disclosure, the index of each block is not used for limiting the sequence of each block. For persons having ordinary skill in the art, without any creative work, changes of sequence of each block are also covered by the protection scope of the present disclosure.

## Claims

1. A data transmission method in a wireless communication network, performed by a node in the wireless communication network, **characterized by** comprising:
when numerology information allocated for a terminal is changed, sending changed numerology information to the terminal, enabling (101) the terminal to utilize resources corresponding to the changed numerology information for data transmission;
wherein the numerology information comprises subcarrier spacing, SCS, frequency domain information of the SCS and cyclic prefix, CP, information of the SCS; the frequency domain information of the SCS comprises at least one of: a subband starting position, a subband ending position, a subband-direct current, DC, carrier position, a subband-center carrier position, a subband bandwidth, or frequency hopping information;
wherein the sending changed numerology information to the terminal, comprises:
sending, via downlink control information, an index of numerology information corresponding to the changed numerology information to the terminal.

2. The data transmission method according to claim 1, wherein before the sending changed numerology information to the terminal, the method further comprises:
indicating the terminal to obtain the changed numerology information via downlink control information; or,
indicating all the terminals in the wireless communication network to obtain the changed numerology information via a broadcast message or a synchronization signal; or,
indicating the terminal to obtain the changed numerology information via a radio resource control, RRC, message.

3. The data transmission method according to claim 1, wherein before the sending changed numerology information to the terminal , the method further comprises:
establishing and storing a corresponding relationship between multiple pieces of numerology information and index of the multiple pieces of numerology information, and sending the corresponding relationship to the terminal.

4. The data transmission method according to claim 1, wherein before sending the changed numerology information to the terminal via the pre-defined message or signal, the method further comprises:
sending a numerology information change indication to the terminal.

5. A data transmission method in a wireless communication network, performed by a terminal in the wireless communication network, **characterized by** comprising:
obtaining (201) changed numerology information after numerology information allocated for the terminal is changed; wherein the numerology information comprises subcarrier spacing, SCS, frequency domain information of the SCS and cyclic prefix, CP, information of the SCS; the frequency domain information of the SCS comprises at least one of: a subband starting position, a subband ending position, a subband-direct current, DC, carrier position, a subband-center carrier position, a subband bandwidth, or frequency hopping information; and,
transmitting (202) data in resources corresponding to the changed numerology information;
wherein the obtaining changed numerology information after numerology information allocated for the terminal is changed, comprises:
receiving, from the node in the wireless communication network via downlink control information, an index of numerology information corresponding to the changed numerology information, and
detecting the changed numerology information, according to the index of the numerology information.

6. The data transmission method according to claim 5, wherein after the numerology information allocated for the terminal is changed, before obtaining the changed numerology information, the method further comprises: receiving, from the node in the wireless communication network, a corresponding relationship between multiple pieces of numerology information and index of the multiple pieces of numerology information.

7. The data transmission method according to claim 5, wherein after the numerology information allocated for the terminal is changed, before obtaining the changed numerology information, the method further comprises: receiving, from the node in the wireless communication network, a numerology information change indication.

8. A data transmission device in a wireless communication network, performed by a node in the wireless communication network, comprising: a memory, a processor, and a computer program stored by the memory, when being executed by the processor, the computer program causes the processor to perform steps of the data transmission method in the wireless communication network claimed in any of claims 1 to 4.

9. A data transmission device in a wireless communication network, applied to a terminal in the wireless communication network, comprising: a memory, a processor, and a computer program stored by the memory, when being executed by the processor, the computer program causes the processor to perform steps of the data transmission method in the wireless communication network claimed in any of claims 5-7.

## Patentansprüche

1. Datenübertragungsverfahren in einem Drahtloskommunikationsnetzwerk, durchgeführt von einem Knoten im Drahtloskommunikationsnetzwerk, **dadurch gekennzeichnet, dass** es Folgendes umfasst:
Senden geänderter Zahleninformationen an das Endgerät unter Freischalten (101) des Endgeräts zur Nutzung von Ressourcen, die den geänderten Zahleninformationen für die Datenübertragung entsprechen, wenn sich für ein Endgerät zugeordnete Zahleninformationen geändert haben,
wobei die Zahleninformationen den Frequenzabstand der Unterträger (Subcarrier Spacing), SCS, Frequenzrauminformationen des SCS und das zyklische Präfix (Cyclic Prefix), CP, Informationen des SCS umfassen, die Frequenzrauminformationen des SCS mindestens entweder eine Teilband-Startposition und/oder eine Teilband-Endposition und/oder einen Teilband-Gleichstrom, DC, und/oder eine Trägerposition und/oder eine Teilband-Mitte-Trägerposition und/oder eine Teilbandbandbreite und/oder Frequenzsprunginformationen umfassen,
wobei das Senden von geänderten Zahleninformationen an das Endgerät Folgendes umfasst:
Senden eines Index von Zahleninformationen entsprechend den geänderten Zahleninformationen per Downlink-Control-Information an das Endgerät.

2. Datenübertragungsverfahren nach Anspruch 1, wobei das Verfahren vor dem Senden von geänderten Zahleninformationen an das Endgerät ferner Folgendes umfasst:
Angeben des Endgeräts, um die geänderten Zahleninformationen per Downlink-Control-Information zu erhalten, oder
Angeben sämtlicher Endgeräte im Drahtloskommunikationsnetzwerk, um die geänderten Zahleninformationen per Rundsendung oder Synchronisationssignal zu erhalten, oder
Angeben des Endgeräts, um die geänderten Zahleninformationen per Radio-Resource-Control-Nachricht, RRC, zu erhalten.

3. Datenübertragungsverfahren nach Anspruch 1, wobei das Verfahren vor dem Senden von geänderten Zahleninformationen an das Endgerät ferner Folgendes umfasst:
Herstellen und Speichern einer Beziehung zwischen mehreren Zahleninformationen und dem Index der mehreren Zahleninformationen und Senden der entsprechenden Beziehung an das Endgerät.

4. Datenübertragungsverfahren nach Anspruch 1, wobei das Verfahren vor dem Senden der geänderten Zahleninformationen an das Endgerät per vorgegebener Nachricht oder vorgegebenem Signal zudem Folgendes umfasst:
Senden einer Zahleninformationenänderungsangabe an das Endgerät.

5. Datenübertragungsverfahren in einem Drahtloskommunikationsnetzwerk, durchgeführt von einem Endgerät im Drahtloskommunikationsnetzwerk, **dadurch gekennzeichnet, dass** es Folgendes umfasst:
Erhalten (201) geänderter Zahleninformationen, nachdem sich die für das Endgerät zugeordneten Zahleninformationen geändert haben, wobei die Zahleninformationen den Frequenzabstand der Unterträger (Subcarrier Spacing), SCS, Frequenzrauminformationen des SCS und das zyklische Präfix (Cyclic Prefix), CP, Informationen des SCS umfassen, die Frequenzrauminformationen des SCS mindestens entweder eine Teilband-Startposition und/oder eine Teilband-Endposition und/oder einen Teilband-Gleichstrom, DC, und/oder eine Trägerposition und/oder eine Teilband-Mitte-Trägerposition und/oder eine Teilbandbandbreite und/oder Frequenzsprunginformationen umfassen, und
Übermitteln (202) von Daten in Ressourcen entsprechend den geänderten Zahleninformationen,
wobei das Erhalten geänderter Zahleninformationen, nachdem sich die für das Endgerät zugeordneten Zahleninformationen geändert haben, Folgendes umfasst:
Empfangen eines Index von Zahleninformationen entsprechend den geänderten Zahleninformationen vom Knoten im Drahtloskommunikationsnetzwerk per Downlink-Control-Information, und
Erkennen der geänderten Zahleninformationen nach dem Index der Zahleninformationen.

6. Datenübertragungsverfahren nach Anspruch 5, wobei das Verfahren, nachdem sich die für das Endgerät zugeordneten Zahleninformationen geändert haben, vor dem Erhalten der geänderten Zahleninformationen zudem Folgendes umfasst: Empfangen vom Knoten im Drahtloskommunikationsnetzwerk einer entsprechenden Beziehung zwischen mehreren Zahleninformationen und dem Index der mehreren Zahleninformationen.

7. Datenübertragungsverfahren nach Anspruch 5, wobei das Verfahren, nachdem sich die für das Endgerät zugeordneten Zahleninformationen geändert haben, vor dem Erhalten der geänderten Zahleninformationen zudem Folgendes umfasst: Empfangen vom Knoten im Drahtloskommunikationsnetzwerk einer Zahleninformationenänderungsangabe.

8. Datenübertragungsvorrichtung in einem Drahtloskommunikationsnetzwerk, durchgeführt von einem Knoten im Drahtloskommunikationsnetzwerk, umfassend: einen Speicher, einen Prozessor und ein vom Speicher gespeichertes Computerprogramm, wobei das Computerprogramm, wenn es vom Prozessor ausgeführt wird, bewirkt, dass der Prozessor Schritte des Datenübertragungsverfahrens im Drahtloskommunikationsnetzwerk nach einem der Ansprüche 1 bis 4 ausführt.

9. Datenübertragungsvorrichtung in einem Drahtloskommunikationsnetzwerk, angewandt auf ein Endgerät im Drahtloskommunikationsnetzwerk, umfassend: einen Speicher, einen Prozessor und ein vom Speicher gespeichertes Computerprogramm, wobei das Computerprogramm, wenn es vom Prozessor ausgeführt wird, bewirkt, dass der Prozessor Schritte des Datenübertragungsverfahrens im Drahtloskommunikationsnetzwerk nach einem der Ansprüche 5-7 ausführt.

## Revendications

1. Procédé de transmission de données dans un réseau de communication sans fil, exécutée par un noeud dans le réseau de communication sans fil, **caractérisé par le fait qu'**il comprend :
lorsque des informations de numérologie allouées à un terminal sont modifiées, envoyer des informations de numérologie modifiées au terminal, permettant (101) au terminal d'utiliser des ressources correspondant aux informations de numérologie modifiées pour la transmission de données ;
dans lequel les informations de numérologie comprennent l'espacement des sous-porteuses (subcarrier spacing), SCS, les informations de domaine de fréquence du SCS et les informations de préfixe cyclique (cyclic prefix), CP, du SCS ; les informations de domaine de fréquence du SCS comprennent au moins l'un des éléments suivants :
une position de début de sous-bande, une position de fin de sous-bande, une position de porteuse de courant continu de sous-bande, une position de porteuse de centre de sous-bande, une largeur de bande de sous-bande, ou des informations de saut de fréquence ;
dans lequel l'envoi d'informations de numérologie modifiées au terminal comprend :
envoyer au terminal, par l'intermédiaire des informations de contrôle de la liaison descendante, un index d'informations de numérologie correspondant aux informations de numérologie modifiées.

2. Procédé de transmission de données selon la revendication 1, dans lequel, avant l'envoi d'informations de numérologie modifiées au terminal, le procédé comprend en outre :
indiquer au terminal d'obtenir les informations de numérologie modifiées par le biais des informations de contrôle de la liaison descendante ; ou,
indiquer à tous les terminaux du réseau de communication sans fil d'obtenir les informations de numérologie modifiées par le biais d'un message de diffusion ou d'un signal de synchronisation ; ou,
indiquer au terminal d'obtenir les informations de numérologie modifiées par le biais d'un message de contrôle des ressources radio (radio resource control), RRC.

3. Procédé de transmission de données selon la revendication 1, dans lequel, avant l'envoi d'informations de numérologie modifiées au terminal, le procédé comprend en outre :
établir et stocker une relation correspondante entre de multiples informations de numérologie et un index des multiples informations de numérologie, et envoyer la relation correspondante au terminal.

4. Procédé de transmission de données selon la revendication 1, dans lequel, avant d'envoyer les informations de numérologie modifiées au terminal par le biais du message ou du signal prédéfini, le procédé comprend également :
envoyer une indication de changement d'information de numérologie au terminal.

5. Procédé de transmission de données dans un réseau de communication sans fil, exécutée par un terminal dans le réseau de communication sans fil, **caractérisé par le fait qu'**il comprend :
obtenir (201) des informations de numérologie modifiées après que les informations de numérologie allouées au terminal ont été modifiées ; les informations de numérologie comprennent l'espacement des sous-porteuses, SCS, les informations de domaine de fréquence du SCS et les informations de préfixe cyclique, CP, du SCS ; les informations de domaine de fréquence du SCS comprennent au moins l'un des éléments suivants : une position de début de sous-bande, une position de fin de sous-bande, une position de porteuse de courant continu de sous-bande, une position de porteuse de centre de sous-bande, une largeur de bande de sous-bande, ou des informations de saut de fréquence ; et
transmettre (202) des données dans des ressources correspondant aux informations de numérologie modifiées ;
dans lequel l'obtention d'informations de numérologie modifiées après que les informations de numérologie allouées au terminal ont été modifiées, comprend :
recevoir, du noeud du réseau de communication sans fil via les informations de contrôle de la liaison descendante, un index des informations de numérologie correspondant aux informations de numérologie modifiées, et
détecter les informations de numérologie modifiées, en fonction de l'index des informations de numérologie.

6. Procédé de transmission de données selon la revendication 5, dans lequel, après modification des informations de numérologie allouées au terminal, avant d'obtenir les informations de numérologie modifiées, la méthode comprend en outre : recevoir, à partir du noeud dans le réseau de communication sans fil, une relation correspondante entre de multiples éléments d'informations de numérologie et un index des multiples éléments d'informations de numérologie.

7. Procédé de transmission de données selon la revendication 5, dans lequel, après modification des informations de numérologie attribuées au terminal, avant d'obtenir les informations de numérologie modifiées, le procédé comprend en outre : recevoir, de la part du noeud du réseau de communication sans fil, une indication de modification des informations de numérologie.

8. Dispositif de transmission de données dans un réseau de communication sans fil, exécuté par un noeud du réseau de communication sans fil, comprenant : une mémoire, un processeur, et un programme d'ordinateur stocké dans la mémoire, lorsqu'il est exécuté par le processeur, le programme d'ordinateur amène le processeur à exécuter les étapes de la méthode de transmission de données dans le réseau de communication sans fil revendiquée dans l'une quelconque des revendications 1 à 4.

9. Dispositif de transmission de données dans un réseau de communication sans fil, appliqué à un terminal dans le réseau de communication sans fil, comprenant : une mémoire, un processeur, et un programme d'ordinateur stocké dans la mémoire, lorsqu'il est exécuté par le processeur, le programme d'ordinateur amène le processeur à exécuter les étapes de la méthode de transmission de données dans le réseau de communication sans fil revendiquée dans l'une quelconque des revendications 5-7.
